# EUROPÄISCHE PATENTSCHRIFT

(11) **EP 4 011 920 B1**
(45) Veröffentlichungstag und Bekanntmachung des Hinweises auf die Patenterteilung: **20.09.2023**
(21) Anmeldenummer: 21209180.5
(22) Anmeldetag: 19.11.2021
(51) Int. Cl.: C08C 19/22, C08C 19/25, C08C 19/44, C08L 15/00, C08L 53/02, B60C 1/00

(54) **KAUTSCHUKMISCHUNG UND FAHRZEUGLUFTREIFEN**
RUBBER COMPOSITION AND PNEUMATIC TYRE FOR A VEHICLE
MÉLANGE DE CAOUTCHOUC ET PNEUMATIQUE DE VÉHICULE

(30) Priorität: 11.12.2020 DE 102020215722
(43) Veröffentlichungstag der Anmeldung: 15.06.2022
(73) Patentinhaber: Continental Reifen Deutschland GmbH, 30165 Hannover (DE)
(72) Erfinder: Sà, Catarina, 30165 Hannover (DE); Pavon Sierra, Viktoria, 30165 Hannover (DE); Recker, Carla, 30165 Hannover (DE); Wehming-Bomkamp, Kathrin, 30165 Hannover (DE)
(74) Vertreter: Continental Corporation

(56) Entgegenhaltungen:
- EP-A1- 0 786 493
- EP-A1- 2 746 323
- DATABASE WPI Week 201629 Thomson Scientific, London, GB; AN 2016-20757S XP002806286, & JP 2016 047883 A (YOKOHAMA RUBBER CO LTD) 7. April 2016 (2016-04-07)
- DATABASE WPI Week 201992 Thomson Scientific, London, GB; AN 2019-98248K XP002806287, & WO 2019/221182 A1 (YOKOHAMA RUBBER CO LTD) 21. November 2019 (2019-11-21)

## Beschreibung

Die Erfindung betrifft eine schwefelvernetzbare Kautschukmischung und einen Fahrzeugluftreifen mit einem Laufstreifen, dessen zumindest mit der Fahrbahn in Berührung kommender Teil aus einer mit Schwefel vulkanisierten Kautschukmischung besteht.

Da die Fahreigenschaften eines Reifens, insbesondere Fahrzeugluftreifens, in einem großen Umfang von der Kautschukzusammensetzung des Laufstreifens abhängig sind, werden besonders hohe Anforderungen an die Zusammensetzung der Laufstreifenmischung gestellt. So wurden vielfältige Versuche unternommen, die Eigenschaften des Reifens durch die Variation der Polymerkomponenten, der Füllstoffe und der sonstigen Zuschlagstoffe in der Laufstreifenmischung positiv zu beeinflussen. Dabei muss man berücksichtigen, dass eine Verbesserung in der einen Reifeneigenschaft oft eine Verschlechterung einer anderen Eigenschaft mit sich bringt, so ist eine Verbesserung des Rollwiderstandes üblicherweise mit einer Verschlechterung des Bremsverhaltens verbunden.

Um Reifeneigenschaften wie Abrieb, Nassrutschverhalten und Rollwiderstand zu beeinflussen, ist es z. B. bekannt, lösungspolymerisierte Styrol-Butadien-Copolymere mit unterschiedlicher Mikrostruktur einzusetzen. Außerdem lassen sich Styrol-Butadien-Copolymere modifizieren, indem z. B. die Styrol- und Vinyl-Anteile variiert werden, Endgruppenmodifizierungen, Kopplungen oder Hydrierungen vorgenommen werden. Die verschiedenen Copolymertypen haben unterschiedlichen Einfluss auf die Vulkanisat- und damit auch auf die Reifeneigenschaften.

In der EP 3 150 403 A1 werden kieselsäurehaltige Kautschukmischungen für Reifen mit niedrigem Rollwiderstand beschrieben, die lösungspolymerisierte Styrol-Butadien-Copolymere enthalten, welche an wenigstens einem Kettenende mit aminogruppen-enthaltenden Alkoxysilylgruppen und einer weiteren Gruppe ausgewählt aus der Gruppe bestehend aus Alkoxysilylgruppen und aminogruppen-enthaltenden Alkoxysilylgruppen funktionalisiert sind. Die Kautschukmischungen enthalten ferner Kieselsäure und zumindest ein geblocktes und/oder ungeblocktes Mercaptosilan. Die Rollwiderstandsreduzierung begründet sich vermutlich in einer verstärkten Füllstoff-Polymer-Wechselwirkung.

Auch in der EP 3 150 402 A1, der EP 3 150 401 A1, der DE 10 2015 218 745 A1 und der DE 10 2015 218 746 A1 werden die lösungspolymerisierte Styrol-Butadien-Copolymere beschrieben, welche an wenigstens einem Kettenende mit aminogruppen-enthaltenden Alkoxysilylgruppen und einer weiteren Gruppe ausgewählt aus der Gruppe bestehend aus Alkoxysilylgruppen und aminogruppen-enthaltenden Alkoxysilylgruppen funktionalisiert sind. Sie werden in Kombination mit unterschiedlichen weiteren Zuschlagstoffen in den Kautschukmischungen eingesetzt.

Die EP 2 703 416 A1 offenbart modifizierte lösungspolymerisierte Styrol-Butadien-Copolymere, deren Herstellung und deren Verwendung in Reifen. Die Styrol-Butadien-Copolymere weisen stickstoffenthaltende Gruppen (aminogruppen-enthaltende Organosilylgruppen) auf, die bei der Herstellung der Polymere mit Schutzgruppen geschützt waren. Die Kautschukmischungen mit derartigen Styrol-Butadien-Copolymeren sollen sich durch ein ausgewogenes Verhältnis von Verarbeitbarkeit, Nassgriff und niedriger Hysterese auszeichnen.

Aus der WO 2018/092716 A1 ist ein konjugierter Dienkautschuk bekannt, der an einem Kettenende durch Reaktion mit zumindest einem Polyorganosiloxan und zumindest einem Alkylaminosilan funktionalisiert ist und am anderen Kettenende mit einer Polyisoprengruppe, enthaltend Isopren- und Styrol-Einheiten, funktionalisiert ist. Der vernetzte Kautschuk soll sich durch einen geringen Wärmeaufbau und ein gutes Nassgriffverhalten auszeichnen.

Ausgehend von diesem Stand der Technik liegt der Erfindung die Aufgabe zugrunde, Kautschukmischungen für die Laufstreifen von Fahrzeugluftreifen bereitzustellen, die ein gutes Abriebverhalten bei gleichzeitig niedrigem Rollwiderstand aufweisen.

Gelöst wird diese Aufgabe durch eine schwefelvernetzbare Kautschukmischung, die
- 20 - 100 phr (Gewichtsteile, bezogen auf 100 Gewichtsteile der gesamten Kautschuke in der Mischung) zumindest eines funktionalisierten Styrol-Butadien-Copolymers A, wobei das funktionalisierte Styrol-Butadien-Copolymer A zumindest teilweise an einem Kettenende durch Reaktion mit zumindest einem Polyorganosiloxan und zumindest einem Alkylaminosilan funktionalisiert ist,
   und wobei das funktionalisierte Styrol-Butadien-Copolymer A am anderen Kettenende mit einer Polyisoprengruppe, enthaltend Isopren- und Styrol-Einheiten, funktionalisiert ist, wobei der Isoprenanteil in der Polyisoprengruppe mehr als 90 Gew.-% beträgt,
- bis zu 80 phr zumindest eines weiteren Dienkautschuks,
- 5 bis 150 phr zumindest eines Harzes auf der Basis von Isopropenylbenzol und
- 40 - 350 phr zumindest eines Füllstoffes enthält.

Die in dieser Schrift verwendete Angabe phr (parts per hundred parts of rubber by weight) ist dabei die in der Kautschukindustrie übliche Mengenangabe für Mischungsrezepturen. Die Dosierung der Gewichtsteile der einzelnen Substanzen wird dabei stets auf 100 Gewichtsteile der gesamten Masse aller in der Mischung vorhandenen festen Kautschuke bezogen.

Überraschenderweise hat sich herausgestellt, dass durch den Einsatz des speziell funktionalisierten Styrol-Butadien-Copolymers A in Kombination mit 5 - 150 phr zumindest eines Harzes auf der Basis von Isopropenylbenzol bei Fahrzeugluftreifen ein gutes Abriebverhalten bei niedrigem Rollwiderstand erzielt werden kann.

Funktionalisierte Styrol-Butadien-Copolymere A werden beispielsweise in der WO 2018/092716 A1 beschrieben. Das funktionalisierte Styrol-Butadien-Copolymer A kann auch in ölverstreckter Form eingesetzt werden.

Das funktionalisierte Styrol-Butadien-Copolymer A weist bevorzugt ein Gewichtsmittel M_{w} des Molekulargewichts gemäß GPC von 300000 bis 600000 g/mol auf und kann damit auch als zumindest bei Raumtemperatur fester Kautschuk bezeichnet werden.

Für eine weitere Verbesserung des Rollwiderstandsverhaltens des Reifens hat es sich als vorteilhaft erwiesen, wenn das Polyorganosiloxan für die Funktionalisierungsreaktion des Styrol-Butadien-Copolymers A Alkylgruppen und/oder Cycloalkylgruppen und/oder Arylgruppen und/oder eine Aralkylgruppen und/oder Alkoxygruppen und/oder Epoxygruppen und/oder Aminogruppen, vorzugsweise zumindest eine Epoxygruppe, enthält. Auf diese Weise scheint sich ein besonders gutes Zusammenspiel zwischen Polymer und vorhandenen Füllstoffen zu ergeben.

Das funktionalisierte Styrol-Butadien-Copolymer A ist durch Reaktion mit einen Alkylaminosilan funktionalisiert.

Das Alkylaminosilan kann dabei die folgende Struktur aufweisen 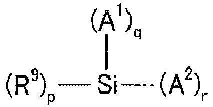 wobei R⁹ eine Kohlenwasserstoffgruppe ist, A¹ eine Gruppe ist, die mit dem Reaktionsprodukt aus dem Styrol-Butadien-Copolymer mit dem Polyorganosiloxan reagieren kann, und A² eine Stickatom-enthaltende Gruppe ist, und wobei p = 0 bis 2, q = 1 bis 3, r = 1 bis 3 und p + q + r = 4.

Für eine gute Reaktion mit dem Reaktionsprodukt aus dem Styrol-Butadien-Copolymer mit dem Polyorganosiloxan enthält das Alkylaminosilan eine primäre und/oder sekundäre Aminogruppe mit einem aktiven Wasserstoffatom.

Vorzugsweise ist das Alkylaminosilan ausgewählt aus 3-Aminopropyltrimethoxysilan, 3-(2-Aminoethylamino)propyltrimethoxysilan, N,N-bis(Triethylsilyl)aminopropyltrimethoxysilan und/oder 3-Diethylaminopropyltrimethoxysilan.

Gemäß einer bevorzugten Weiterbildung der Erfindung weist die Polyisoprengruppe des funktionalisierten Styrol-Butadien-Copolymers A ein mittleres Molekulargewicht M_{w} von 2000 bis 10000 g/mol, vorzugsweise 5000 bis 8000 g/mol, auf. Die Eigenschaften von Fahrzeugluftreifen mit einem Laufstreifen aus einer derartigen Mischung können auf diese Weise weiter verbessert werden.

Vorzugsweise ist das funktionalisierte Styrol-Butadien-Copolymer A frei von zusätzlichen Kautschuk-Kopplungsmitteln. Letztere können einen störenden Einfluss auf das Verarbeitungsverhalten haben. Unter diesen zusätzlichen Kautschuk-Kopplungsmitteln sind solche zu verstehen, die der Fachmann üblicherweise für die Kopplung von Polymeren einsetzt. Es kann sich dabei beispielsweise um SnCl₄ oder SiCl₄ sowie deren Alkyltrichloride handeln.

Die erfindungsgemäße Kautschukmischung enthält 20 bis 100 phr, vorzugsweise 50 bis 100 phr, zumindest eines funktionalisierten Styrol-Butadien-Copolymers A. Es können auch mehrere Polymere dieses Typs im Verschnitt eingesetzt werden.

Die erfindungsgemäße Kautschukmischung enthält weiterhin bis zu 80 phr, vorzugsweise bis zu 50 phr, zumindest eines weiteren Dienkautschuks. Als Dienkautschuke werden Kautschuke bezeichnet, die durch Polymerisation oder Copolymerisation von Dienen und/oder Cycloalkenen entstehen und somit entweder in der Hauptkette oder in den Seitengruppen C=C-Doppelbindungen aufweisen.

Bei den Dienkautschuken kann es sich z. B. um natürliches Polyisopren und/oder synthetisches Polyisopren und/oder Polybutadien (Butadien-Kautschuk) und/oder Styrol-Butadien-Copolymer (Styrol-Butadien-Kautschuk) und/oder epoxidiertes Polyisopren und/oder Styrol-Isopren-Kautschuk und/oder Halobutyl-Kautschuk und/oder Polynorbornen und/oder Isopren-Isobutylen-Copolymer und/oder Ethylen-Propylen-DienKautschuk handeln. Die Kautschuke können als reine Kautschuke oder in ölverstreckter Form eingesetzt werden.

Bevorzugt ist der weitere Dienkautschuk jedoch ausgewählt aus der Gruppe, bestehend aus natürlichem Polyisopren, synthetischem Polyisopren, Polybutadien und weiteren Styrol-Butadien-Copolymeren. Diese Dienkautschuke lassen sich gut zu der Kautschukmischung verarbeiten und ergeben in den vulkanisierten Reifen gute Reifeneigenschaften.

Bei dem natürlichen und/oder synthetischen Polyisopren kann es sich sowohl um cis-1,4-Polyisopren als auch um 3,4-Polyisopren handeln. Bevorzugt ist allerdings die Verwendung von cis-1,4-Polyisoprenen mit einem cis 1,4 Anteil > 90 Gew.-%. Zum einen kann solch ein Polyisopren durch stereospezifische Polymerisation in Lösung mit Ziegler-Natta-Katalysatoren oder unter Verwendung von fein verteilten Lithiumalkylen erhalten werden. Zum anderen handelt es sich bei Naturkautschuk (NR) um ein solches cis-1,4 Polyisopren; der cis-1,4-Anteil im Naturkautschuk ist größer 99 Gew.-%.

Ferner ist auch ein Gemisch eines oder mehrerer natürlicher Polyisoprene mit einem oder mehreren synthetischen Polyisoprenen denkbar. Natürliches Polyisopren wird verstanden als Kautschuk, der durch Ernte von Quellen wie Kautschukbäumen (Hevea brasiliensis) oder nicht-Kautschukbaumquellen (wie z. B. Guayule oder Löwenzahn (z. B. Taraxacum koksaghyz)) gewonnen werden kann. Unter natürlichem Polyisopren (NR) wird nicht synthetisches Polyisopren verstanden.

Bei dem Butadien-Kautschuk (BR, Polybutadien) kann es sich um alle dem Fachmann bekannten Typen mit einem M_{w} von 250000 bis 500000 g/mol handeln. Darunter fallen u. a. die sogenannten high-cis- und low-cis-Typen, wobei Polybutadien mit einem cis-Anteil größer oder gleich 90 Gew.-% als high-cis-Typ und Polybutadien mit einem cis-Anteil kleiner als 90 Gew.-% als low-cis-Typ bezeichnet wird. Ein low-cis-Polybutadien ist z. B. Li-BR (Lithium-katalysierter Butadien-Kautschuk) mit einem cis-Anteil von 20 bis 50 Gew.-%. Mit einem high-cis BR werden besonders gute Abriebeigenschaften sowie eine niedrige Hysterese der Kautschukmischung erzielt. Das eingesetzte Polybutadien kann mit Modifizierungen und Funktionalisierungen endgruppenmodifiziert und/oder entlang der Polymerketten funktionalisiert sein. Bei der Modifizierung kann es sich um solche mit Hydroxy-Gruppen und/oder Ethoxy-Gruppen und/oder Epoxy-Gruppen und/oder SiloxanGruppen und/oder Amino-Gruppen und/oder Aminosiloxan und/oder Carboxy-Gruppen und/oder Phthalocyanin-Gruppen und/oder Silan-Sulfid-Gruppen handeln. Es kommen aber auch weitere, der fachkundigen Person bekannte, Modifizierungen, auch als Funktionalisierungen bezeichnet, in Frage. Bestandteil solcher Funktionalisierungen können Metallatome sein.

Bei dem weiteren Styrol-Butadien-Kautschuk (Styrol-Butadien-Copolymer) kann es sich sowohl um lösungspolymerisierten Styrol-Butadien-Kautschuk (SSBR) als auch um emulsionspolymerisierten Styrol-Butadien-Kautschuk (ESBR) handeln, wobei auch ein Gemisch aus wenigstens einem SSBR und wenigstens einem ESBR eingesetzt werden kann. Die Begriffe "Styrol-Butadien-Kautschuk" und "Styrol-Butadien-Copolymer" werden im Rahmen der vorliegenden Erfindung synonym verwendet. Bevorzugt sind in jedem Fall Styrol-Butadien-Copolymere mit einem M_{w} von 250000 bis 600000 g/mol (zweihundertfünfzigtausend bis sechshunderttausend Gramm pro Mol).

Das oder die eingesetzte(n) weiteren Styrol-Butadien-Copolymere kann/können mit anderen Modifizierungen und Funktionalisierungen als beim Styrol-Butadien-Copolymer A endgruppenmodifiziert und/oder entlang der Polymerketten funktionalisiert sein.

Erfindungswesentlich ist, dass die Kautschukmischung 5 bis 150 phr, bevorzugt 20 bis 70 phr, besonders bevorzugt 20 bis 40 phr, zumindest eines Harzes auf der Basis von Isopropenylbenzol enthält.

Harze auf der Basis von Isopropenylbenzol, auch AMS-Harze (α-Methylstyrol-Harze) genannt, fallen als Copolymere bei der Polymerisation der im Leichtöl des Steinkohlenteers enthaltenen ungesättigten Verbindungen an. Sie sind z. B. unter dem Namen Sylvares^{™} SA 85 AMS resin von der Firma Kraton erhältlich.

Die Kautschukmischung enthält 40 bis 350 phr zumindest eines Füllstoffes. Dabei kann es sich um Füllstoffe, wie Ruße, Kieselsäuren, Alumosilicate, Kreide, Stärke, Magnesiumoxid, Titandioxid oder Kautschukgele handeln, wobei die Füllstoffe in Kombination eingesetzt werden können. Weiterhin sind Kohlenstoffnanoröhrchen (carbon nanotubes (CNT) inklusive diskreter CNTs, sogenannte hollow carbon fibers (HCF) und modifizierte CNT enthaltend eine oder mehrere funktionelle Gruppen, wie Hydroxy-, Carboxy und Carbonyl-Gruppen) denkbar. Auch Graphit und Graphene sowie sogenannte "carbon-silica dual-phase filler" sind als Füllstoff einsetzbar.

Ist in der Kautschukmischung Ruß enthalten, können alle dem Fachmann bekannten Ruß-Typen eingesetzt werden. Bevorzugt wird jedoch ein Ruß eingesetzt, der eine Jodadsorptionszahl gemäß ASTM D 1510 von 30 bis 180 g/kg, bevorzugt 30 bis 130 kg/g, und eine DBP-Zahl gemäß ASTM D 2414 von 80 bis 200 ml/100 g, bevorzugt 100 bis 200 ml/100g, besonders bevorzugt 100 bis 180 ml/100g, aufweist. Hiermit werden für die Anwendung im Fahrzeugreifen besonders gute Rollwiderstandsindikatoren (Rückprallelastizität bei 70 °C) bei guten sonstigen Reifeneigenschaften erzielt.

Gemäß einer bevorzugten Weiterbildung der Erfindung enthält die Kautschukmischung 0,1 bis 20 phr Ruß. Bei diesen geringen Rußmengen könnten bei besten Reifeneigenschaften in Hinblick auf den Rollwiderstand und den Nassgriff erzielt werden.

Zur Reduzierung des Rollwiderstandes hat es sich als vorteilhaft erwiesen, wenn die Kautschukmischung als Füllstoff Kieselsäure enthält. Das Styrol-Butadien-Copolymer A kann über seine funktionellen Gruppen mit der Kieselsäure in Wechselwirkung treten.

Es können unterschiedlichste Kieselsäuren, wie "low surface area" oder hoch dispergierbare Kieselsäure, auch im Gemisch, zum Einsatz kommen. Besonders bevorzugt ist es, wenn eine fein verteilte, gefällte Kieselsäure verwendet wird, die eine CTAB-Oberfläche (gemäß ASTM D 3765) von 30 bis 350 m²/g, vorzugsweise von 110 bis 250 m²/g, aufweist. Als Kieselsäuren können sowohl konventionelle Kieselsäuren wie die des Typs VN3 (Handelsname) der Firma Evonik als auch hoch dispergierbare Kieselsäuren, so genannte HD-Kieselsäuren (z. B. Ultrasil 7000 der Firma Evonik), zum Einsatz kommen.

Vorzugsweise enthält die Kautschukmischung 50 bis 200 phr Kieselsäure, um eine gute Verarbeitbarkeit bei guten Reifeneigenschaften zu erzielen.

Zur Verbesserung der Verarbeitbarkeit und zur Anbindung der Kieselsäure an den Dienkautschuk in kieselsäurehaltigen Mischungen wird vorzugsweise zumindest ein Silan-Kupplungsagens in Mengen von 1 - 15 phf (Gewichtsteile, bezogen auf 100 Gewichtsteile Kieselsäure) in der Kautschukmischung eingesetzt.

Die in dieser Schrift verwendete Angabe phf (parts per hundred parts of filler by weight) ist dabei die in der Kautschukindustrie gebräuchliche Mengenangabe für Kupplungsagenzien für Füllstoffe. Im Rahmen der vorliegenden Anmeldung bezieht sich phf auf die vorhandene Kieselsäure, das heißt, dass andere eventuell vorhandene Füllstoffe wie Ruß nicht in die Berechnung der Menge an Silan-Kupplungsagens mit eingehen.

Die Silan-Kupplungsagenzien reagieren mit den oberflächlichen Silanolgruppen der Kieselsäure oder anderen polaren Gruppen während des Mischens des Kautschuks bzw. der Kautschukmischung (in situ) oder bereits vor der Zugabe des Füllstoffes zum Kautschuk im Sinne einer Vorbehandlung (Vormodifizierung). Als Silan-Kupplungsagenzien können dabei alle dem Fachmann für die Verwendung in Kautschukmischungen bekannten Silan-Kupplungsagenzien verwendet werden. Solche aus dem Stand der Technik bekannten Kupplungsagenzien sind bifunktionelle Organosilane, die am Siliciumatom mindestens eine Alkoxy-, Cycloalkoxy- oder Phenoxygruppe als Abgangsgruppe besitzen und die als andere Funktionalität eine Gruppe aufweisen, die gegebenenfalls nach Spaltung eine chemische Reaktion mit den Doppelbindungen des Polymers eingehen kann. Bei der letztgenannten Gruppe kann es sich z. B. um die folgenden chemischen Gruppen handeln: -SCN, -SH, -NH₂ oder -Sₓ- (mit x = 2-8). So können als Silan-Kupplungsagenzien z. B. 3-Mercaptopropyltriethoxysilan, 3-Thiocyanato-propyltrimethoxysilan oder 3,3 `-Bis(triethoxysilylpropyl)polysulfide mit 2 bis 8 Schwefelatomen, wie z. B. 3,3 `-Bis(triethoxysilylpropyl)tetrasulfid (TESPT), das entsprechende Disulfid oder auch Gemische aus den Sulfiden mit 1 bis 8 Schwefelatomen mit unterschiedlichen Gehalten an den verschiedenen Sulfiden, verwendet werden. TESPT kann dabei beispielsweise auch als Gemisch mit Industrieruß (Handelsname X50S der Firma Degussa) zugesetzt werden. Auch geblockte Mercaptosilane, wie sie z. B. aus der WO 99/09036 bekannt sind, können als Silan-Kupplungsagens eingesetzt werden. Auch Silane, wie sie in der WO 2008/083241 A1, der WO 2008/083242 A1, der WO 2008/083243 A1 und der WO 2008/083244 A1 beschrieben sind, können eingesetzt werden. Verwendbar sind z. B. Silane, die unter dem Namen NXT^{®} in verschiedenen Varianten von der Firma Momentive, USA, oder solche, die unter dem Namen VP Si 363 von der Firma Evonik Industries vertrieben werden. Einsetzbar sind auch sogenannte "silated core polysulfides" (SCP, Polysulfide mit silyliertem Kern), die z. B. in der US 20080161477 A1 und der EP 2 114 961 B1 beschrieben werden.

Die erfindungsgemäße Kautschukmischung kann bis zu 150 phr, vorzugsweise bis zu 80 phr, wenigstens eines Weichmachers enthalten.

Zu den im Rahmen der vorliegenden Erfindung verwendeten Weichmachern gehören alle dem Fachmann bekannten Weichmacher wie aromatische, naphthenische oder paraffinische Mineralölweichmacher, wie z. B. MES (mild extraction solvate) oder RAE (Residual Aromatic Extract) oder TDAE (treated distillate aromatic extract), oder Rubberto-Liquid-Öle (RTL) oder Biomass-to-Liquid-Öle (BTL) bevorzugt mit einem Gehalt an polyzyklischen Aromaten von weniger als 3 Gew.-% gemäß Methode IP 346 oder Rapsöl oder Faktisse oder weitere Weichmacherharze oder Flüssig-Polymere. Der oder die Weichmacher werden bei der Herstellung der erfindungsgemäßen Kautschukmischung bevorzugt in wenigstens einer Grundmischstufe zugegeben.

Des Weiteren kann die erfindungsgemäße Kautschukmischung übliche Zusatzstoffe in üblichen Gewichtsteilen enthalten. Zu diesen Zusatzstoffen zählen
a) Alterungsschutzmittel, wie z. B. N-Phenyl-N'-(1,3-dimethylbutyl)-p-phenylendiamin (6PPD), N,N'-Diphenyl-p-phenylendiamin (DPPD), N,N'-Ditolyl-p-phenylendiamin (DTPD), N-Isopropyl-N'-phenyl-p-phenylendiamin (IPPD), 2,2,4-Trimethyl-1,2-dihydrochinolin (TMQ), N, N'- bis-(1,4- Dimethylpentyl)-p-Phenylenediamin (77PD)
b) Aktivatoren, wie z. B. Zinkoxid und Fettsäuren (z. B. Stearinsäure),
c) Wachse,
d) weitere Harze, insbesondere Klebharze,
e) Mastikationshilfsmittel, wie z. B. 2,2'-Dibenzamidodiphenyldisulfid (DBD und
f) Verarbeitungshilfsmittel, wie z. B. Fettsäuresalze, wie z. B. Zinkseifen, und Fettsäureester und deren Derivate.

Die Vulkanisation der Kautschukmischung wird in Anwesenheit von Schwefel und/oder Schwefelspendern mit Hilfe von Vulkanisationsbeschleunigern durchgeführt, wobei einige Vulkanisationsbeschleuniger zugleich als Schwefelspender wirken können. Dabei ist der Beschleuniger ausgewählt aus der Gruppe bestehend aus Thiazolbeschleunigern und/oder Mercaptobeschleunigern und/oder Sulfenamidbeschleunigern und/oder Thiocarbamatbeschleunigern und/oder Thiurambeschleunigem und/oder Thiophosphatbeschleunigern und/oder Thioharnstoffbeschleunigern und/oder Xanthogenat-Beschleunigern und/oder Guanidin-Beschleunigern.

Bevorzugt ist die Verwendung eines Sulfenamidbeschleunigers, der ausgewählt ist aus der Gruppe bestehend aus N-Cyclohexyl-2-benzothiazolsufenamid (CBS) und/oder N,N-Dicyclohexylbenzothiazol-2-sulfenamid (DCBS) und/oder Benzothiazyl-2-sulfenmorpholid (MBS) und/oder N-tert-Butyl-2-benzothiazylsulfenamid (TBBS).

Außerdem kann die Kautschukmischung Vulkanisationsverzögerer enthalten.

Als schwefelspendende Substanz können dabei alle dem Fachmann bekannten schwefelspendenden Substanzen verwendet werden. Enthält die Kautschukmischung eine schwefelspendende Substanz, ist diese bevorzugt ausgewählt aus der Gruppe bestehend aus z. B. Thiuramdisulfiden, wie z. B. Tetrabenzylthiuramdisulfid (TBzTD), Tetramethylthiuramdisulfid (TMTD) oder Tetraethylthiuramdisulfid (TETD), Thiuramtetrasulfiden, wie z. B. Dipentamethylenthiuramtetrasulfid (DPTT), Dithiophosphaten, wie z. B. DipDis (Bis-(Diisopropyl)thiophosphoryldisulfid), Bis(O,O-2-ethylhexyl-thiophosphoryl)Polysulfid (z. B. Rhenocure SDT 50^{®}, Rheinchemie GmbH, Zinkdichloryldithiophosphat (z. B. Rhenocure ZDT/S^{®}, Rheinchemie GmbH) oder Zinkalkyldithiophosphat, und 1,6-Bis(N,N-dibenzylthiocarbamoyldithio)hexan und Diarylpolysulfiden und Dialkylpolysulfiden.

Auch weitere netzwerkbildende Systeme, wie sie beispielsweise unter den Handelsnamen Vulkuren^{®}, Duralink^{®} oder Perkaiink^{®} erhältlich sind, oder netzwerkbildende Systeme, wie sie in der WO 2010/049216 A2 beschrieben sind, können in der Kautschukmischung eingesetzt werden. Das letztere System enthält ein Vulkanisationsmittel, welches mit einer Funktionalität größer vier vernetzt und zumindest einen Vulkanisationsbeschleuniger.

Der Kautschukmischung wird bei deren Herstellung bevorzugt wenigstens ein Vulkanisationsmittel ausgewählt aus der Gruppe bestehend aus Schwefel, Schwefelspender, Vulkanisationsbeschleuniger und Vulkanisationsmittel, die mit einer Funktionalität größer vier vernetzen, in der Fertigmischstufe zugegeben. Hierdurch lässt sich aus der gemischten Fertigmischung durch Vulkanisation eine schwefelvernetzte Kautschukmischung für die Anwendung im Fahrzeugluftreifen herstellen.

Die Begriffe "vulkanisiert" und "vernetzt" werden im Rahmen der vorliegenden Erfindung synonym verwendet.

Die Herstellung der Kautschukmischung erfolgt nach dem in der Kautschukindustrie üblichen Verfahren, bei dem zunächst in ein oder mehreren Mischstufen eine Grundmischung mit allen Bestandteilen außer dem Vulkanisationssystem (Schwefel und vulkanisationsbeeinflussende Substanzen) hergestellt wird. Durch Zugabe des Vulkanisationssystems in einer letzten Mischstufe wird die Fertigmischung erzeugt. Die Fertigmischung wird z. B. durch einen Extrusionsvorgang weiterverarbeitet und in die entsprechende Form gebracht. Anschließend erfolgt die Weiterverarbeitung durch Vulkanisation, wobei aufgrund des im Rahmen der vorliegenden Erfindung zugegebenen Vulkanisationssystems eine Schwefelvernetzung stattfindet.

Die Kautschukmischung wird für die Herstellung von Fahrzeugluftreifen, wie PKW-, Van-, LKW- oder Zweiradreifen, verwendet, wobei die Kautschukmischung zumindest den mit der Fahrbahn in Berührung kommenden Teil des Laufstreifens bildet.

Bei einem Fahrzeugluftreifen kann der Laufstreifen aus einer einzigen Mischung bestehen, die dann ein funktionalisierte Styrol-Butadien-Copolymer A, ggf. einen weiteren Dienkautschuk, das spezielle Harz und Füllstoff enthält. Häufig weisen Fahrzeugluftreifen heute jedoch einen Laufstreifen mit einer sogenannten CapBase-Konstruktion auf. Unter "Cap" wird dabei der mit der Fahrbahn in Berührung kommende Teil des Laufstreifens verstanden, der radial außen angeordnet ist (Laufstreifenoberteil oder Laufstreifencap). Unter "Base" wird dabei der Teil des Laufstreifens verstanden, der radial innen angeordnet ist, und somit im Fahrbetrieb nicht oder nur am Ende des Reifenlebens mit der Fahrbahn in Berührung kommt (Laufstreifenunterteil oder Laustreifenbase). Bei einem Fahrzeugluftreifen mit einer solchen CapBase-Konstruktion ist zumindest die Kautschukmischung für die Cap gemäß dem Anspruch 1 ausgebildet.

Der erfindungsgemäße Fahrzeugluftreifen kann auch einen Laufstreifen aufweisen, der aus verschiedenen nebeneinander und/oder untereinander angeordneten Laufstreifenmischungen besteht (Multikomponentenlaufstreifen).

Bei der Herstellung des Fahrzeugluftreifens wird die Mischung als Fertigmischung vor der Vulkanisation in die Form eines Laufstreifens, bevorzugt wenigstens in die Form einer Laufstreifencap, gebracht und bei der Herstellung des Fahrzeugreifenrohlings wie bekannt aufgebracht. Der Laufstreifen, bevorzugt wenigstens die Laufstreifencap, kann auch in Form eines schmalen Kautschukmischungsstreifens auf einen Reifenrohling aufgewickelt werden.

Die Erfindung soll nun anhand von Vergleichs- und Ausführungsbeispielen, die in der Tabelle 1 zusammengefasst sind, näher erläutert werden.

Es wurde ein funktionalisiertes **Styrol-Butadien-Copolymer A** gemäß folgender Versuchsbeschreibung synthetisiert:
70 g Cyclohexan und 0,77 mmol Tetramethylethylendiamin wurden in eine mit Stickstoff gespülte 800 ml Ampulle gegeben, und 7,69 mmol n-Butyllithium (Menge äquivalent zu 0,10 mol Tetramethylethylendiamin als polare Verbindung in Bezug auf 1 mol n-Butyllithium) von wurden hinzugefügt. Anschließend wurden 27,9 g Isopren und 2,1 g Styrol langsam zugegeben, und man ließ 120 Minuten bei 50 °C reagieren, wobei ein Polymerblock mit einem aktiven Ende erhalten wurde. Dieser Polymerblock hatte ein mittleres Molekulargewicht (Mw) von 6.500 g/mol, eine Polydispersität (Mw / Mn) von 1,10, einen Styrolgehalt von 7,0 Gew.-%, einen Isoprengehalt von 93,0 Gew.-% und einen Vinylgehalt von 7,7 Gew.-%.

Ein mit einem Rührer ausgestatteter Autoklav wurde in einer Stickstoffatmosphäre mit 4000 g Cyclohexan, 12,9 mmol Tetramethylethylendiamin, 432 g 1,3-Butadien und 168 g Styrol und anschließend der Gesamtmenge des vorgenannten Polymerblocks mit dem aktiven Ende beschickt. Die Polymerisationsreaktion wurde bei 50 °C gestartet (die Menge an Tetramethylethylendiamin als polare Verbindung, die in dem Reaktionssystem in Bezug auf 1 mol verwendetes n-Butyllithium vorhanden ist, beträgt 1,79 mol).

Nach Ablauf von 10 Minuten nach Beginn der Polymerisation wurden über einen Zeitraum von 60 Minuten kontinuierlich 358 g 1,3-Butadien und 42 g Styrol zugegeben. Die maximale Temperatur während der Polymerisationsreaktion betrug 75 °C. Nachdem die kontinuierliche Zugabe abgeschlossen war, wurde die Polymerisationsreaktion weitere 10 Minuten fortgesetzt. Nach Bestätigung einer Umsetzungsrate von 95% bis 100%, wurden 2,44 g des folgenden Polyorganosiloxans als 40 Gew.-%ige Lösung in Xylol zugegeben: 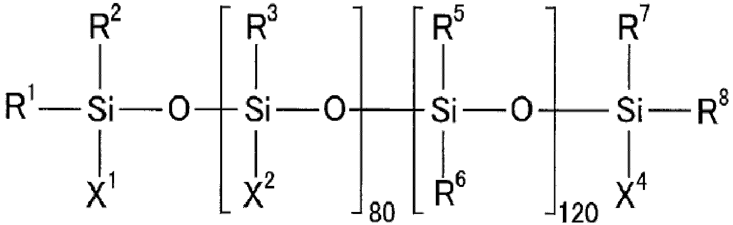 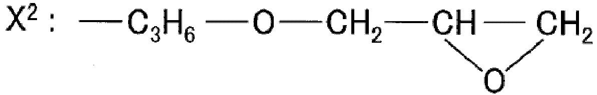 X¹, X⁴, R¹∼R³, R⁵∼R⁸: -CH₃

Es wurde über 30 min umgesetzt. Anschließend wurden 7,69 mmol 3-(2-Aminoethylamino)propyltrimethoxysilan als Alkylaminosilan zugegeben und über 10 min umgesetzt. Dann wurde Methanol in einer Menge, entsprechend 2 mol des verwendeten n-Butyllithiums, als Polymerisationsterminator zugegeben, um eine Lösung zu erhalten, die funktionalisiertes Styrol-Butadien-Copolymer A enthielt.

In Bezug auf 100 Teile des funktionalisierten Styrol-Butadien-Copolymers A wurden 0,15 Teile Irganox 1520 L (hergestellt von BASF) als Alterungsschutzmittel und 10 Teile eines TDAE-Öls zu der Lösung gegeben, dann wurde ein Dampfstrippen durchgeführt, um das Lösemittel zu entfernen. Im Anschluss wurde im Vakuum bei 60 °C über 24 h getrocknet. Das erhaltene feste, funktionalisierte Styrol-Butadien-Copolymer A hatte ein Gewichtsmittel des Molekulargewichts (M_{w}) von 550000 g/mol, einen Kopplungsgrad von 58,0 %, einen Styrolgehalt von 21,0 Gew.-% und einen Vinylgehalt von 60 Gew.-%.

Dieses so erhaltene funktionalisierte Styrol-Butadien-Copolymer A wurde für die erfindungsgemäßen Mischungen der Tabelle 1 eingesetzt.

In der Tabelle 1 sind Vergleichsmischungen mit V, die erfindungsgemäße Mischung ist mit E gekennzeichnet.

Die Mischungsherstellung erfolgte nach den in der Kautschukindustrie üblichen Verfahren unter üblichen Bedingungen in drei Stufen in einem Labormischer bei dem zunächst in der ersten Mischstufe (Grundmischstufe) alle Bestandteile außer dem Vulkanisationssystem (Schwefel und vulkanisationsbeeinflussende Substanzen) vermischt wurden. In der zweiten Mischstufe wurde die Grundmischung nochmals durchmischt. Durch Zugabe des Vulkanisationssystems in der dritten Stufe (Fertigmischstufe) wurde die Fertigmischung erzeugt, wobei bei 90 bis 120 °C gemischt wurde.

Im Anschluss wurde die Mooney-Viskosität ML1+4 bei 100 °C gemäß ASTM D1646 in Mooney-Einheiten M.E. ermittelt.

Aus sämtlichen Mischungen wurden Prüfkörper durch 20-minütige Vulkanisation unter Druck bei 160 °C hergestellt und mit diesen Prüfkörpern für die Kautschukindustrie typische Materialeigenschaften mit den im Folgenden angegebenen Testverfahren ermittelt:
- Shore-A-Härte bei Raumtemperatur mittels Durometer gemäß DIN ISO 7619-1
- Rückprallelastizität bei 70°C gemäß DIN 53 512
- Abrieb bei Raumtemperatur gemäß DIN/ISO 4649

**Tabelle 1**

| **Bestandteile** | **Einheit** | **1(V)** | **2(V)** | **3(V)** | **4(E)** |
|---|---|---|---|---|---|
| Naturkautschuk | phr | 15 | 15 | 15 | 15 |
| SBR ^{a} | phr | 85 | - | 85 | - |
| SBR A^{b} | phr | - | 93,25 | - | 93,25 |
| Ruß N220 | phr | 5 | 5 | 5 | 5 |
| Kieselsäure^{c} | phr | 115 | 115 | 115 | 115 |
| Weichmacheröl^{d} | phr | 49 | 40,4 | 19 | 10,5 |
| Harz^{e} | phr | - | - | 30 | 30 |
| Zusatzstoffe | phr | 11 | 11 | 11 | 11 |
| Silan-Kupplungsagens^{f} | phr | 8,3 | 8,3 | 8,3 | 8,3 |
| Beschleuniger | phr | 5,4 | 5,4 | 5,4 | 5,4 |
| Schwefel | phr | 1,3 | 1,3 | 1,3 | 1,3 |

| **Eigenschaften** | | | | | |
|---|---|---|---|---|---|
| Mooney Viskosität (1+4) | M.E. | 46 | 62 | 59 | 52 |
| Shorehärte bei RT | Shore A | 82 | 79 | 83 | 81 |
| Rückprallelastizität bei 70 °C | % | 44 | 47 | 41 | 48 |
| Abrieb | mm³ | 155 | 146 | 167 | 124 |

| | | | | | |
|---|---|---|---|---|---|
| ^{a}NS 616, Nippon Zeon, Japan, lösungspolymerisiertes Styrol-Butadien-Copolymer, Styrol-Anteil: 21 Gew.-%, funktionalisiert mit Epoxy- und Hydroxygruppen ^{b}funktionalisiertes lösungspolymerisiertes Styrol-Butadien-Copolymer A gemäß Versuchsbeschreibung zumindest teilweise funktionalisiert an einem Kettenende durch Reaktion mit einem Polyorganosiloxan und einem Alkylaminosilan und funktionalisiert am anderen Kettenende mit einer Polyisoprengruppe, Styrol-Anteil: 21 Gew.-%, Vinyl-Anteil: 60 Gew.-%, ölverstreckt mit 10 phr Öl pro 100 phr Copolymer ^{c} HD-Kieselsäure mit einer CTAB-Oberfläche von 160 m²/g ^{d} Mineralölweichmacher TDAE (treated distillate aromatic extract), Vivatec^{®} 500, Fa. Klaus Dahleke KG ^{e} Sylvares^{™} SA 85 AMS resin, Kraton, Niederlande, Isopropenylbenzol-Harz, Erweichungspunkt = 80 - 90 °C (gemäß ASTM E 28) ^{f} 3,3'-Bis(triethoxysilylpropyl)disulfid (TESPD), Si261, Fa. Evonik; | | | | | |

Der Tabelle 1 kann man entnehmen, dass durch die spezielle Kombination des funktionalisierten Styrol-Butadien-Copolymers A mit dem speziellen Harz der Abrieb deutlich reduziert und damit verbessert werden kann, wobei gleichzeitig der Rollwiderstand auf gutem Niveau verbleibt. Letzteres kann beispielsweise aus dem Wert für die Rückprallelastizität bei 70 °C geschlossen werden. Zusätzlich weist die erfindungsgemäße Kautschukmischung ein gutes Viskositätsniveau auf, welches zu einer guten und wirtschaftlichen Verarbeitbarkeit der Mischung beiträgt.

## Patentansprüche

1. Schwefelvernetzbare Kautschukmischung, insbesondere für den Laufstreifen von Fahrzeugluftreifen, enthaltend
- 20 - 100 phr (Gewichtsteile, bezogen auf 100 Gewichtsteile der gesamten Kautschuke in der Mischung) zumindest eines funktionalisierten Styrol-Butadien-Copolymers A,
wobei das funktionalisierte Styrol-Butadien-Copolymer A zumindest teilweise an einem Kettenende durch Reaktion mit zumindest einem Polyorganosiloxan und zumindest einem Alkylaminosilan funktionalisiert ist,
und wobei das funktionalisierte Styrol-Butadien-Copolymer A am anderen Kettenende mit einer Polyisoprengruppe, enthaltend Isopren- und Styrol-Einheiten, funktionalisiert ist, wobei der Isoprenanteil in der Polyisoprengruppe mehr als 90 Gew.-% beträgt,
- bis zu 80 phr zumindest eines weiteren Dienkautschuks,
- 5 bis 150 phr zumindest eines Harzes auf der Basis von Isopropenylbenzol und
- 40 - 350 phr zumindest eines Füllstoffes.

2. Schwefelvernetzbare Kautschukmischung nach Anspruch 1, **dadurch gekennzeichnet, dass** das Polyorganosiloxan Alkylgruppen und/oder Cycloalkylgruppen und/oder Arylgruppen und/oder eine Aralkylgruppen und/oder Alkoxygruppen und/oder Epoxygruppen und/oder Aminogruppen enthält.

3. Schwefelvernetzbare Kautschukmischung nach Anspruch 1 oder 2, **dadurch gekennzeichnet, dass** das Polyorganosiloxan zumindest eine Epoxygruppe enthält.

4. Schwefelvernetzbare Kautschukmischung nach zumindest einem der vorhergehenden Ansprüche, **dadurch gekennzeichnet, dass** das Alkylaminosilan eine primäre und/oder sekundäre Aminogruppe mit einem aktiven Wasserstoffatom enthält.

5. Schwefelvernetzbare Kautschukmischung nach Anspruch 4, **dadurch gekennzeichnet, dass** das Alkylaminosilan ausgewählt ist aus 3-Aminopropyltrimethoxysilan, 3-(2-Aminoethylamino)propyltrimethoxysilan, N,N-bis(Triethylsilyl)aminopropyltrimethoxysilan und/oder 3-Diethylaminopropyltrimethoxysilan.

6. Schwefelvernetzbare Kautschukmischung nach zumindest einem der vorhergehenden Ansprüche, **dadurch gekennzeichnet, dass** die Polyisoprengruppe ein mittleres Molekulargewicht M_{w} von 2000 bis 10000 g/mol, vorzugsweise 5000 bis 8000 g/mol, aufweist.

7. Schwefelvernetzbare Kautschukmischung nach zumindest einem der vorhergehenden Ansprüche, **dadurch gekennzeichnet, dass** das funktionalisierte Styrol-Butadien-Copolymer A frei von zusätzlichen Kautschuk-Kopplungsmitteln ist.

8. Schwefelvernetzbare Kautschukmischung nach zumindest einem der vorhergehenden Ansprüche, **dadurch gekennzeichnet, dass** der weitere Dienkautschuk ausgewählt ist aus der Gruppe, bestehend aus natürlichem Polyisopren, synthetischem Polyisopren, Polybutadien und weiteren Styrol-Butadien-Copolymeren.

9. Schwefelvernetzbare Kautschukmischung nach zumindest einem der vorhergehenden Ansprüche, **dadurch gekennzeichnet, dass** sie 20 bis 70 phr, vorzugsweise 20 bis 40 phr, zumindest eines Harzes auf der Basis von Isopropenylbenzol enthält.

10. Schwefelvernetzbare Kautschukmischung nach zumindest einem der vorhergehenden Ansprüche, **dadurch gekennzeichnet, dass** sie als Füllstoff Kieselsäure enthält.

11. Schwefelvernetzbare Kautschukmischung nach Anspruch 10, **dadurch gekennzeichnet, dass** sie 50 bis 150 phr Kieselsäure enthält.

12. Schwefelvernetzbare Kautschukmischung nach Anspruch 10 oder 11, **dadurch gekennzeichnet, dass** sie 1 - 15 phf (Gewichtsteile, bezogen auf 100 Gewichtsteile Kieselsäure) zumindest eines Silan-Kupplungsagenzes enthält.

13. Fahrzeugluftreifen mit einem Laufstreifen, dessen zumindest mit der Fahrbahn in Berührung kommender Teil aus einer mit Schwefel vulkanisierten Kautschukmischung nach einem der Ansprüche 1 bis 12 besteht.

## Claims

1. Sulfur-crosslinkable rubber mixture, in particular for the tread of pneumatic vehicle tyres, containing
- 20-100 phr (parts by weight based on 100 parts by weight of the total rubbers in the mixture) of at least one functionalized styrene-butadiene copolymer A,
wherein the functionalized styrene-butadiene copolymer A is at least partially functionalized at one chain end by reaction with at least one polyorganosiloxane and at least one alkylaminosilane,
and wherein the functionalized styrene-butadiene copolymer A is functionalized at the other chain end with a polyisoprene group containing isoprene and styrene units, wherein the isoprene proportion in the polyisoprene group is more than 90% by weight,
- up to 80 phr of at least one further diene rubber,
- 5 to 150 phr of at least one resin based on isopropenylbenzene and
- 40-350 phr of at least one filler.

2. Sulfur-crosslinkable rubber mixture according to Claim 1, **characterized in that** the polyorganosiloxane contains alkyl groups and/or cycloalkyl groups and/or aryl groups and/or arallkyl groups and/or alkoxy groups and/or epoxy groups and/or amino groups.

3. Sulfur-crosslinkable rubber mixture according to Claim 1 or 2, **characterized in that** the polyorganosiloxane contains at least one epoxy group.

4. Sulfur-crosslinkable rubber mixture according to at least one of the preceding claims, **characterized in that** the alkylaminosilane contains a primary and/or secondary amino group having an active hydrogen atom.

5. Sulfur-crosslinkable rubber mixture according to Claim 4, **characterized in that** the alkylaminosilane is selected from 3-aminopropyltrimethoxysilane, 3-(2-aminoethylamino)propyltrimethoxysilane,N,N-bis(triethylsilyl)aminopropyltrimethoxysilane and/or 3-diethylaminopropyltrimethoxysilane.

6. Sulfur-crosslinkable rubber mixture according to at least one of the preceding claims, **characterized in that** the polyisoprene group has an average molecular weight M_{w} of 2000 to 10 000 g/mol, preferably 5000 to 8000 g/mol.

7. Sulfur-crosslinkable rubber mixture according to at least one of the preceding claims, **characterized in that** the functionalized styrene-butadiene copolymer A is free from additional rubber coupling agents.

8. Sulfur-crosslinkable rubber mixture according to at least one of the preceding claims, **characterized in that** the further diene rubber is selected from the group consisting of natural polyisoprene, synthetic polyisoprene, polybutadiene and further styrene-butadiene copolymers.

9. Sulfur-crosslinkable rubber mixture according to at least one of the preceding claims, **characterized in that** it contains 20 to 70 phr, preferably 20 to 40 phr, of at least one resin based on isopropenylbenzene.

10. Sulfur-crosslinkable rubber mixture according to at least one of the preceding claims, **characterized in that** it contains silica as a filler.

11. Sulfur-crosslinkable rubber mixture according to Claim 10, **characterized in that** it contains 50 to 150 phr of silica.

12. Sulfur-crosslinkable rubber mixture according to Claim 10 or 11, **characterized in that** it contains 1-15 phf (parts by weight based on 100 parts by weight of silica) of at least one silane coupling agent.

13. Pneumatic vehicle tyre having a tread, the at least roadway-contacting portion of which is composed of a sulfur-vulcanized rubber mixture according to any of Claims 1 to 12.

## Revendications

1. Mélange de caoutchouc réticulable au soufre, en particulier pour la bande de roulement de pneumatique de véhicule, contenant
- 20 à 100 phr (parties en poids, par rapport à 100 parties en poids des caoutchoucs totaux dans le mélange) d'au moins un copolymère de butadiène-styrène fonctionnalisé A,
le copolymère de butadiène-styrène fonctionnalisé A étant au moins partiellement fonctionnalisé au niveau d'une extrémité de chaîne par réaction avec au moins un polyorganosiloxane et au moins un alkylaminosilane,
et le copolymère de butadiène-styrène fonctionnalisé A étant fonctionnalisé au niveau de l'autre extrémité de chaîne par un groupe polyisoprène, contenant des motifs d'isoprène et de styrène, la proportion d'isoprène dans le groupe polyisoprène étant supérieure à 90 % en poids,
- jusqu'à 80 phr d'au moins un caoutchouc de diène supplémentaire,
- 5 à 150 phr d'au moins une résine à base d'isopropénylbenzène et
- 40 à 350 phr d'au moins une charge.

2. Mélange de caoutchouc réticulable au soufre selon la revendication 1, **caractérisé en ce que** le polyorganosiloxane contient des groupes alkyle et/ou des groupes cycloalkyle et/ou des groupes aryle et/ou des groupes aralkyle et/ou des groupes alcoxy et/ou des groupes époxy et/ou des groupes amino.

3. Mélange de caoutchouc réticulable au soufre selon la revendication 1 ou 2, **caractérisé en ce que** le polyorganosiloxane contient au moins un groupe époxy.

4. Mélange de caoutchouc réticulable au soufre selon au moins l'une quelconque des revendications précédentes, **caractérisé en ce que** l'alkylaminosilane contient un groupe amino primaire et/ou secondaire comportant un atome d'hydrogène actif.

5. Mélange de caoutchouc réticulable au soufre selon la revendication 4, **caractérisé en ce que** l'alkylaminosilane est choisi parmi le 3-aminopropyltriméthoxysilane, le 3-(2-aminoéthylamino) propyltriméthoxysilane, le N,N-bis(triéthylsilyl)aminopropyltriméthoxysilane et/ou le 3-diéthylaminopropyltriméthoxysilane.

6. Mélange de caoutchouc réticulable au soufre selon au moins l'une quelconque des revendications précédentes, **caractérisé en ce que** le groupe polyisoprène présente un poids moléculaire moyen M_{w} de 2 000 à 10 000 g/mole, de préférence de 5 000 à 8 000 g/mole.

7. Mélange de caoutchouc réticulable au soufre selon au moins l'une quelconque des revendications précédentes, **caractérisé en ce que** le copolymère de butadiène-styrène fonctionnalisé A est exempt d'agents de couplage de caoutchouc supplémentaires.

8. Mélange de caoutchouc réticulable au soufre selon au moins l'une quelconque des revendications précédentes, **caractérisé en ce que** le caoutchouc de diène supplémentaire est choisi dans le groupe constitué par un polyisoprène naturel, un polyisoprène synthétique, un polybutadiène et des copolymères de butadiène-styrène supplémentaires.

9. Mélange de caoutchouc réticulable au soufre selon au moins l'une quelconque des revendications précédentes, **caractérisé en ce qu'**il contient 20 à 70 phr, de préférence 20 à 40 phr, d'au moins une résine à base d'isopropénylbenzène.

10. Mélange de caoutchouc réticulable au soufre selon au moins l'une quelconque des revendications précédentes, **caractérisé en ce qu'**il contient de la silice en tant que charge.

11. Mélange de caoutchouc réticulable au soufre selon la revendication 10, **caractérisé en ce qu'**il contient 50 à 150 phr de silice.

12. Mélange de caoutchouc réticulable au soufre selon la revendication 10 ou 11, **caractérisé en ce qu'**il contient 1 à 15 phf (parties en poids, par rapport à 100 parties en poids de silice) d'au moins un agent de couplage de silane.

13. Pneumatique de véhicule comportant une bande de roulement, dont au moins la partie entrant en contact avec la chaussée est constituée par un mélange de caoutchouc selon l'une quelconque des revendications 1 à 12 vulcanisé avec du soufre.
